# EUROPÄISCHE PATENTANMELDUNG

(11) **EP 0 872 807 A1**
(43) Veröffentlichungstag der Anmeldung: **21.10.1998**
(21) Anmeldenummer: 98107160.8
(22) Anmeldetag: 20.04.1998
(51) Int. Cl.: G06K 7/00

(54) **Chipkarten-Lesevorrichtung**

(30) Priorität: 18.04.1997 DE 19716357
(71) Anmelder: Schneider, Robert, 85276 Pfaffenhofen (DE)
(72) Erfinder: Neifer, Wolfgang, 85354 Freising (DE)
(74) Vertreter: Kiessling, Christian

(57) **Zusammenfassung**

Bei einer Vorrichtung zum Lesen von Chipkarten, mit mindestens einem eine Chipkarte aufnehmenden Kanal, der mindestens einen Lesekopf aufweist, wobei die Vorrichtung in einen zur Aufnahme von Modulen vorgesehenen Aufnahmeschacht eines Computers lösbar einschiebbar ist, wird ein Lesen zweier Chipkarten dadurch ermöglicht, daß in dem Kanal zur Aufnahme mindestens einer Chipkarte zwei hintere Begrenzungswände in zwei unterschiedlichen Ebenen vorgesehen sind, die in jeweils unterschiedlichem Abstand von der Öffnung des Kanals angeordnet sind, so daß zwei direkt übereinander angeordnete Chipkarten unterschiedlich weit in den Kanal einschiebbar sind.

## Beschreibung

Die Erfindung betrifft eine Vorrichtung zum Lesen von Chipkarten.

Im Stand der Technik ist eine Mehrzahl unterschiedlicher Chipkarten bekannt, die für Kreditzwecke, zum Telefonieren oder für Sicherheitsaufgaben und Informationsübermittlungen verwendet werden. Die Chipkarten haben meist das übliche Kreditkartenstandardformat und werden in Chipkartenleser unterschiedlichster Bauformen eingelesen. Zu diesem Zweck sind separate Chipkartenleser bekannt, die in einen Aufnahmeschacht eines Computer einschiebbar sind, um Daten der Chipkarte in den Computer zu übertragen. Für diverse Applikationen ist es jedoch notwendig oder vorteilhaft, zwei separate Chipkarten mit einem Computer zu verbinden, wobei auch eine Verbindung zwischen den jeweiligen Chipkarten herstellbar ist.

Aus EP 0 696 010 A1 ist es bekannt, mit einem Chipkartenleser gleichzeitig zwei Chipkarten zu verwenden, die unterschiedlich tief in den Chipkartenleser einsteckbar sind. Die beiden Chipkarten sind dabei auch in einen gemeinsamen Aufnahmekanal einschiebbar, in dem ein Vorsprung vorgesehen ist, der eine definierte Positionierung der Karten innerhalb des Aufnahmekanals bewirkt. Dabei kann es jedoch vorkommen, daß sich eine zuerst eingeschobene Karte an dem Vorsprung verhakt, wodurch der Einschiebevorgang erschwert sein kann.

Aufgabe der Erfindung ist es, eine Chipkarten-Lesevorrichtung zu schaffen, mit der ein Einschieben zweier Chipkarten in einen Aufnahmekanal auf einfache Weise ermöglicht ist.

Erfindungsgemäß wird diese Aufgabe gelöst durch eine Vorrichtung zum Lesen von Chipkarten, mit mindestens einem eine Chipkarte aufnehmenden Kanal, der mindestens einen Lesekopf aufweist, wobei die Vorrichtung in einen zur Aufnahme von Modulen vorgesehenen Aufnahmeschacht eines Computers lösbar einschiebbar ist, wobei in dem Kanal zur Aufnahme mindestens einer Chipkarte zwei hintere Begrenzungswände in zwei unterschiedlichen Ebenen vorgesehen sind, die in jeweils unterschiedlichem Abstand von der Öffnung des Kanals angeordnet sind, so daß zwei direkt übereinander angeordnete Chipkarten unterschiedlich weit in den Kanal einschiebbar sind, mit einer Vorspanneinrichtung, die so vorgespannt ist, daR die untere der beiden Chipkarten beim Einführen in die leere Vorrichtung in Richtung aus der Ebene der oberen der zwei unterschiedlichen Ebenen heraus in die untere Ebene gedrückt wird, wobei die Vorspanneinrichtung an der oberen Begrenzungswand der oberen der zwei unterschiedlichen Ebenen angeordnet ist.

Bevorzugte Ausgestaltungen der Erfindung sind Gegenstand der Unteransprüche.

Bei der erfindungsgemäßen Vorrichtung wird durch das Vorsehen eines Kanals mit zwei hinteren Begrenzungswänden, die in zwei unterschiedlichen Ebenen mit jeweils unterschiedlichem Abstand von der Öffnung des Kanals angeordnet sind, erreicht, daß die Chips zweier in die Lesevorrichtung eingeschobener Chipkarten voneinander so weit versetzt in ihrer jeweiligen Endposition, in der sie an die jeweilige Begrenzungswand des Kanals angrenzen, zu liegen kommen, daß sie jeweils mit einem oberhalb einer Chipkarte angeordneten Lesekopf kontaktierbar sind. Gleichzeitig ist durch den Umstand, daß die beiden Chipkarten in in der Lesevorrichtung eingeschobener Lage nach außen unterschiedliche weit aus der Lesevorrichtung hervorstehen sichergestellt, daß mindestens eine der beiden Chipkarten auch in eingeschobener Lage erkennbar und identifizierbar bleibt.

Gemäß einer bevorzugten Ausführungsform der erfindungsgemäßen Lesevorrichtung ist eine Vorspanneinrichtung vorgesehen, die so vorgespannt ist, daß die untere der beiden Chipkarten beim Einführen in die leere Vorrichtung in Richtung aus der Ebene der oberen der zwei unterschiedlichen Ebenen heraus in die untere Ebene gedrückt wird. Alternativ ist erfindungsgemäß eine Vorspanneinrichtung vorgesehen ist, die so vorgespannt ist, daR die obere der beiden Chipkarten beim Einführen in die leere Vorrichtung in Richtung aus der Ebene der unteren der zwei unterschiedlichen Ebenen heraus in die obere Ebene gedrückt wird. Dadurch wird erreicht, daß in der erfindungsgemäßen Lesevorrichtung sowohl nur eine Chipkarte als auch zwei Chipkarten gleichzeitig gelesen werden können.

Ist eine Vorspanneinrichtung vorgesehen, die so vorgespannt ist, daß die untere der beiden Chipkarten beim Einführen in die leere Vorrichtung in Richtung aus der Ebene der oberen der zwei unterschiedlichen Ebenen heraus in die untere Ebene gedrückt wird, so ist die Vorspanneinrichtung vorzugsweise an der oberen Begrenzungswand der oberen der zwei unterschiedlichen Ebenen angeordnet ist. Die Vorspanneinrichtung der erfindungsgemäßen Lesevorrichtung ist in diesem Fall vorzugsweise eine Blattfeder ist, deren beide Enden an die obere Begrenzungswand der oberen der zwei unterschiedlichen Ebenen angrenzen.

Durch diese Maßnahme wird erreicht, daß die Vorspanneinrichtung jeweils an einer Stelle angeordnet ist, von der aus sie direkt in Richtung der Position wirkt, in die eine jeweils zuerst eingeführte Chipkarte geführt werden soll.

Gemäß dieser Ausführungsform ist die erfindungsgemäße Lesevorrichtung so ausgestaltet, daß in eingeschobenem Zustand nur der unteren Chipkarte der Chip dieser Chipkarte mit nur einem ersten Lesekopf kontaktiert. In eingeschobenem Zustand beider Chipkarten kontaktier gemäß dieser Ausführungsform der Chip der unteren Chipkarte mit nur dem ersten Lesekopf, und der Chip der oberen Chipkarte kontaktiert nur mit einem zweiten Lesekopf, wobei die Leseköpfe entsprechend dem Abstand der beiden in unterschiedlichen Ebenen angeordneten hinteren Begrenzungswände voneinander beabstandet sind.

Ist hingegen eine Vorspanneinrichtung vorgesehen, die so vorgespannt ist, daß die untere der beiden Chipkarten beim Einführen in die leere Vorrichtung in Richtung aus der Ebene der oberen der zwei unterschiedlichen Ebenen heraus in die untere Ebene gedrückt wird, so ist die Vorspanneinrichtung vorzugsweise an der unteren Begrenzungswand der unteren der zwei unterschiedlichen Ebenen angeordnet ist. Die Vorspanneinrichtung der erfindungsgemäßen Lesevorrichtung ist in diesem Fall vorzugsweise eine Blattfeder ist, deren beide Enden an die untere Begrenzungswand der unteren der zwei unterschiedlichen Ebenen angrenzen.

Auch durch diese Maßnahme wird erreicht, daß die Vorspanneinrichtung jeweils an einer Stelle angeordnet ist, von der aus sie direkt in Richtung der Position wirkt, in die eine jeweils zuerst eingeführte Chipkarte geführt werden soll.

Gemäß dieser Ausführungsform ist die erfindungsgemäße Lesevorrichtung so ausgestaltet, daß in eingeschobenem Zustand nur der oberen Chipkarte der Chip dieser Chipkarte mit nur einem ersten Lesekopf kontaktiert. In eingeschobenem Zustand beider Chipkarten kontaktier gemäß dieser Ausführungsform der Chip der oberen Chipkarte mit nur dem ersten Lesekopf, und der Chip der unteren Chipkarte kontaktiert nur mit einem zweiten Lesekopf, wobei die Leseköpfe entsprechend dem Abstand der beiden in unterschiedlichen Ebenen angeordneten hinteren Begrenzungswände voneinander beabstandet sind.

Die erfindungsgemäße Vorrichtung weist in ihrem vorderen Bereich vorzugsweise zwei Zentrierungselemente zum Positionieren der Betriebsposition der Chipkarte in der Lesevorrichtung auf. Die Zentrierungselemente können dabei gradlinig ausgebildet sein, oder sie können entsprechend dem Krümmungsradius der Ecken einer ISO-IC-Karte gebogen ausgebildet sein. Dadurch wird ein sicheres Positionieren der jeweiligen Chipkarten in ihrer Betriebsposition erreicht.

Bei der erfindungsgemäßen Lesevorrichtung kann ein Einführen der mindestens einen Chipkarte in die Vorrichtung dadurch erleichtert sein, daß an den Seitenflächen der Vorrichtung Führungsbänder vorgesehen sind, die eine Führung der Chipkarte in dem Kanal und eine Führung der Vorrichtung in dem Aufnahmeschacht bewirken.

Alternativ kann ein Einführen der mindestens einen Chipkarte in die Lesevorrichtung dadurch erleichtert sein, daß die Vorrichtung einem vorderen Bereich aufweist, der in den Aufnahmeschacht eines Computers einschiebbar ist, und einen hinteren Bereich aufweist, der kürzer als der vordere Bereich ist, wobei Höhe und Breite des hinteren Bereichs jeweils größer als diejenigen der Aufnahmeschachtes des Computers sind, und wobei in dem hinteren Bereich eine Führung für in den ersten Teil einzuschiebende Chipkarten vorgesehen ist.

Die erfindungsgemäße Chipkarten-Lesevorrichtung wird im folgenden anhand einer bevorzugten Ausführungsform erläutert, die in der Figur der Zeichnung dargestellt ist. Darin zeigt:

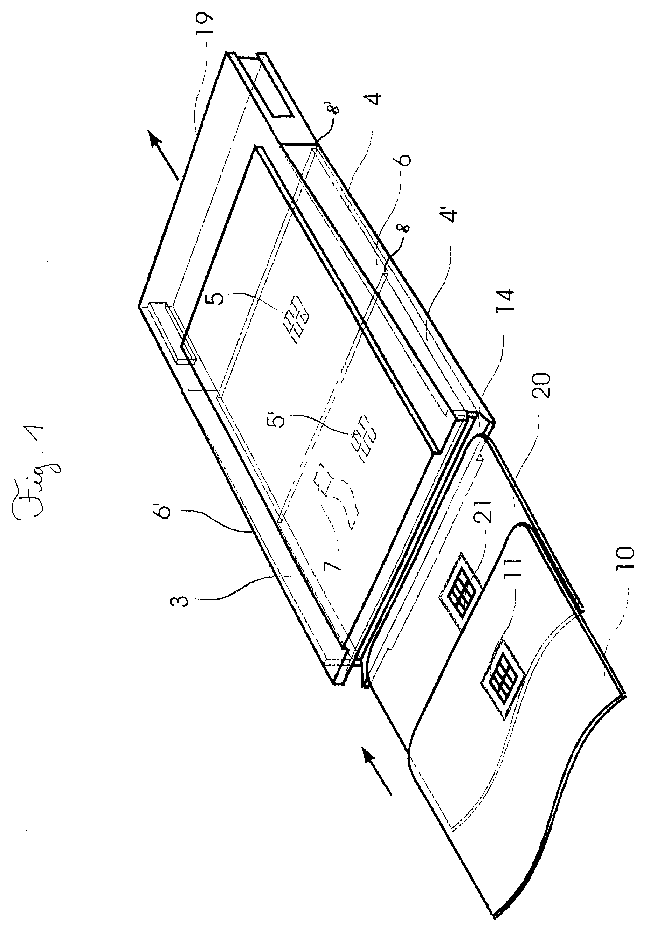

- Fig. 1: eine Ausführungsform zum Einführen von zwei Chipkarten der erfindungsgemäßen Lesevorrichtung in einer Ansicht von schräg oben.

Bei der in Fig. 1 dargestellten erfindungsgemäßen Chipkarten-Lesevorrichtung 3 sind zwei Chipkarten 10, 20 in die Eingangsöffnung 14 eines Kanals 4, 4' einführbar, wobei die Chipkarten 10, 20 in eingeführtem Zustand direkt übereinander in dem Kanal 4, 4' zu liegen kommen. Der Kanal 4, 4' weist dabei in zwei unterschiedlichen Ebenen zwei jeweilige hintere Begrenzungswände 8, 8' auf, die in unterschiedlichem Abstand von der Eingangsöffnung 14 des Kanals 4 angeordnet sind, so daß die beiden Chipkarten 10, 20 jeweils unterschiedlich weit in den Kanal 4 einschiebbar sind. In eingeschobenem Zustand der Chipkarte 20 kontaktiert der Chip 21 mit einem Lesekopf 5, wobei bei gleichzeitig eingeschobener Chipkarte 10 der Chip 11 mit dem Lesekopf 5' kontaktiert. An der oberen Begrenzungswand des Kanals 4' ist eine Blattfeder 7 vorgesehen, die bewirkt, daß die Chipkarte 20 beim Einführen in die leere Lesevorrichtung 3 in Richtung von der Begrenzungswand 8 fort in Richtung des Kanals 4 gedrückt wird. Während eines Einschiebevorgangs werden die jeweiligen Chipkarten 10, 20 seitlich von Bändern 6, 6' geführt, die an den Seitenflächen der Lesevorrichtung 3 angeordnet sind und sich bis zu etwa 3/4 der Länge der Seitenflächen der Lesevorrichtung erstrecken. Die Bänder 6, 6' bewirken darüber hinaus ein sicheres Einführen der Lesevorrichtung 3 in einen nicht dargestellten Aufnahmeschacht eines Computers.

## Patentansprüche

1. Vorrichtung zum Lesen von Chipkarten, mit mindestens einem eine Chipkarte aufnehmenden Kanal, der mindestens einen Lesekopf aufweist, wobei die Vorrichtung in einen zur Aufnahme von Modulen vorgesehenen Aufnahmeschacht eines Computers lösbar einschiebbar ist, wobei in dem Kanal zur Aufnahme mindestens einer Chipkarte zwei hintere Begrenzungswände in zwei unterschiedlichen Ebenen vorgesehen sind, die in jeweils unterschiedlichem Abstand von der Öffnung des Kanals angeordnet sind, so daß zwei direkt übereinander angeordnete Chipkarten unterschiedlich weit in den Kanal einschiebbar sind, mit einer Vorspanneinrichtung, die so vorgespannt ist, daß die untere der beiden Chipkarten beim Einführen in die leere Vorrichtung in Richtung aus der Ebene der oberen der zwei unterschiedlichen Ebenen heraus in die untere Ebene gedrückt wird, wobei die Vorspanneinrichtung an der oberen Begrenzungswand der oberen der zwei unterschiedlichen Ebenen angeordnet ist.

2. Vorrichtung nach Anspruch 1, dadurch gekennzeichnet, daß die Vorspanneinrichtung eine Blattfeder ist, deren beide Enden an die obere Begrenzungswand der oberen der zwei unterschiedlichen Ebenen angrenzen.

3. Vorrichtung nach einem der vorhergehenden Ansprüche, dadurch gekennzeichnet, daß in eingeschobenem Zustand nur der unteren Chipkarte der Chip dieser Chipkarte mit nur einem ersten Lesekopf kontaktiert.

4. Vorrichtung nach einem der vorhergehenden Ansprüche, dadurch gekennzeichnet, daß in eingeschobenem Zustand beider Chipkarten der Chip der unteren Chipkarte mit nur einem ersten Lesekopf kontaktiert und der Chip der oberen Chipkarte nur mit einem zweiten Lesekopf kontaktiert, wobei die Leseköpfe entsprechend dem Abstand der beiden in unterschiedlichen Ebenen angeordneten hinteren Begrenzungswände voneinander beabstandet sind.

5. Vorrichtung nach einem der vorhergehenden Ansprüche, dadurch gekennzeichnet, daß in eingeschobenem Zustand nur der oberen Chipkarte der Chip dieser Chipkarte mit nur einem ersten Lesekopf kontaktiert.

6. Vorrichtung nach einem der vorhergehenden Ansprüche, dadurch gekennzeichnet, daß in eingeschobenem Zustand beider Chipkarten der Chip der oberen Chipkarte mit nur einem ersten Lesekopf kontaktiert und der Chip der unteren Chipkarte nur mit einem zweiten Lesekopf kontaktiert, wobei die Leseköpfe entsprechend dem Abstand der beiden in unterschiedlichen Ebenen angeordneten hinteren Begrenzungswände voneinander beabstandet sind.

7. Vorrichtung nach einem der vorhergehenden Ansprüche, dadurch gekennzeichnet, daß jeweils zwei Zentrierungselemente zum Positionieren der Betriebsposition der jeweiligen Chipkarten an den beiden in zwei unterschiedlichen Ebenen angeordneten hinteren Begrenzungswände vorgesehen sind.

8. Vorrichtung nach Anspruch 7, dadurch gekennzeichnet, daß die Zentrierungselemente gradlinig ausgebildet sind.

9. Vorrichtung nach Anspruch 7, dadurch gekennzeichnet, daß die Zentrierungselemente entsprechend dem Krümmungsradius der Ecken einer ISO-IC-Karte gebogen ausgebildet sind.

10. Vorrichtung nach einem der vorhergehenden Ansprüche, dadurch gekennzeichnet, daß an den Seitenflächen der Vorrichtung Führungsbänder vorgesehen sind, die eine Führung der Chipkarte in dem Kanal und eine Führung der Vorrichtung in dem Aufnahmeschacht bewirken.

11. Vorrichtung nach einem der Ansprüche 1 bis 9, dadurch gekennzeichnet, daß die Vorrichtung einem vorderen Bereich aufweist, der in den Aufnahmeschacht eines Computers einschiebbar ist, und einen hinteren Bereich aufweist, der kürzer als der vordere Bereich ist, wobei Höhe und Breite des hinteren Bereichs jeweils größer als diejenigen der Aufnahmeschachtes des Computers sind, und wobei in dem hinteren Bereich eine Führung für in den ersten Teil einzuschiebende Chipkarten vorgesehen ist.
